# EUROPÄISCHE PATENTANMELDUNG

(11) **EP 2 309 233 A2**
(43) Veröffentlichungstag der Anmeldung: **13.04.2011**
(21) Anmeldenummer: 10010470.2
(22) Anmeldetag: 24.09.2010
(51) Int. Cl.: G01F 1/115, G01F 1/12, G01F 15/02

(54) **Durchflussmesseinrichtung mit Dreh- und Temperaturmessfühlern**

(30) Priorität: 09.10.2009 AT 15932009
(71) Anmelder: Kral AG, 6890 Lustenau (AT)
(72) Erfinder: Naier, Martin, 6890 Lustenau (AT); Wipplinger, Reinhard, 6971 Hard (AT); Schrittwieser, Markus, 6850 Dornbirn (AT)
(74) Vertreter: Hofmann, Ralf U.

(57) **Zusammenfassung**

Durchflussmesseinrichtung (1) zur Messung eines Durchflusses zumindest einer Flüssigkeit durch eine, in einem Gehäuse (2) der Durchflussmesseinrichtung (1) angeordnete Messkammer (3), wobei die Durchflussmesseinrichtung (1) zumindest ein drehbar gelagertes und von durch die Messkammer (3) hindurch fließender Flüssigkeit drehbares Drehelement (4) und zumindest zwei Drehmessfühler (5) zur Messung der Drehung des Drehelementes (4) aufweist, wobei die beiden Drehmessfühler (5) an einem gemeinsamen Messfühlerträger (6) angeordnet sind und an dem gemeinsamen Messfühlerträger (6) zusätzlich noch ein Temperaturmessfühler (7) angeordnet ist.

## Beschreibung

Die vorliegende Erfindung betrifft eine Durchflussmesseinrichtung zur Messung eines Durchflusses zumindest einer Flüssigkeit durch eine, in einem Gehäuse der Durchflussmesseinrichtung angeordnete Messkammer, wobei die Durchflussmesseinrichtung zumindest ein drehbar gelagertes und von durch die Messkammer hindurch fließender Flüssigkeit drehbares Drehelement und zumindest zwei Drehmessfühler zur Messung der Drehung des Drehelementes aufweist.

Gattungsgemäße Durchflussmesseinrichtungen kommen in unterschiedlichsten Bereichen zum Einsatz. Sie dienen dazu, den Durchfluss zumindest einer Flüssigkeit durch eine Messkammer der Durchflussmesseinrichtung und damit durch die Durchflussmesseinrichtung zu bestimmen. Es kann dabei darum gehen, die Durchflussmenge, die Durchflussrate oder daraus abgeleitete Größen zu bestimmen. Das drehbare Drehelement kann dabei direkt von der durch die Messkammer strömenden Flüssigkeit beaufschlagt werden. Es ist aber auch möglich, dass das Drehelement, dessen Drehbewegung von den Drehmessfühlern gemessen wird, selbst nicht in der Messkammer angeordnet ist, sondern mit dort drehbar gelagerten Zahnrädern, Spindeln oder dergleichen in Verbindung steht und von diesen gedreht wird.

Eine gattungsgemäße Durchflussmesseinrichtung ist aus der WO 2005/119185 A1 bekannt. Hier sind die beiden Drehmessfühler bzw. Sensoren beabstandet voneinander an einem Gehäuse eines Messwerkelementes angeordnet.

Aufgabe der vorliegenden Erfindung ist es, für eine gattungsgemäße Durchflussmesseinrichtung eine möglichst kompakte und universell einsetzbare Anordnung der zumindest zwei Drehmessfühler zur Verfügung zu stellen.

Dies wird erfindungsgemäß erreicht, indem die beiden Drehmessfühler an einem gemeinsamen Messfühlerträger angeordnet sind und an dem gemeinsamen Messfühlerträger zusätzlich noch ein Temperaturmessfühler angeordnet ist.

Durch die Anordnung der beiden Drehmessfühler auf einem gemeinsamen Messfühlerträger ergibt sich eine kompakte Anordnung. Durch den zusätzlich auf dem Messfühlerträger angeordneten Temperaturmessfühler ist es möglich, temperaturbedingte Dichteunterschiede - bzw. -schwankungen der zu messenden Flüssigkeit bei der Durchflussmessung zu berücksichtigen bzw. entsprechend zu korrigieren. Hierdurch wird die Durchflussmesseinrichtung in unterschiedlichsten Temperaturbereichen bzw. auch bei wechselnden Temperaturen und damit sehr universell einsetzbar. Durch die Anordnung des Temperaturmessfühlers auf dem gemeinsamen Messfühlerträger ergibt sich wiederum eine sehr kompakte Bauweise. Durch die kompakte Bauweise kann auch eine entsprechend hohe Druckfestigkeit erreicht werden. Dies ist besonders dann wichtig, wenn die Messfühler und der Messfühlerträger in direkten Kontakt mit unter hohem Druck stehender Flüssigkeit kommen. Ob eine Druckverbindung zwischen Messkammer und den Messfühlern bzw. dem Messfühlerträger besteht, hängt von der jeweiligen Ausführungsform ab.

Das Drehelement kann in der Messkammer direkt von der durch die Messkammer hindurch fließenden Flüssigkeit beaufschlagt werden. Alternativ ist es auch möglich, dass in der Messkammer ein anderes drehbares Element vorhanden ist, welches mit dem Drehelement verbunden ist und von der vorbeiströmenden Flüssigkeit gedreht wird. Eine mögliche Ausgestaltungsform sieht z.B. vor, dass das Drehelement mit zumindest einer, in der Messkammer drehbar gelagerten und von durch die Messkammer hindurch fließender Flüssigkeit drehbaren Messspindel verbunden ist.

Mit erfindungsgemäßen Durchflussmesseinrichtungen kann die Durchflussmenge in Form eines Volumens und/oder die Durchflussrate in Form eines Volumens pro Zeiteinheit und/oder die Durchflussrichtung bestimmt werden. Darüber hinaus können auch davon abgeleitete Größen wie z.B. die Masse der hindurchströmenden Flüssigkeit bestimmt werden. Es ist also möglich, mit erfindungsgemäßen Durchflussmesseinrichtungen verschiedene, den Durchfluss der Flüssigkeit durch die Messkammer charakterisierende Größen zu bestimmen. Hierzu ist es günstig, wenn die zumindest zwei Drehmessfühler die Drehgeschwindigkeit und/oder die Drehrichtung des Drehelementes messen.

Ein besonders kompakter aber auch druckfester Aufbau kann erreicht werden, indem die Drehmessfühler und der Temperaturmessfühler auf einer gemeinsamen Trägerplatte, vorzugsweise auf einer gemeinsamen Trägerplatine, des Messfühlerträgers angeordnet sind. Im Sinne einer kompakten Bauweise ist es sogar möglich, dass die Drehmessfühler in einen gemeinsamen Chip integriert sind. Unter einem Chip wird dabei ein elektronisches Bauteil bzw. ein elektronischer, integrierter Schaltkreis verstanden, bei dem auf einem gemeinsamen Substrat eine oder mehrere elektronische Schaltungen untergebracht sind. Geeignete Chips mit zumindest zwei Drehmessfühlern sind beim Stand der Technik bekannt. Als Beispiel ist hier der Chip in NVE ABL 014 der Firma NVE Corporation, 11409 Valley View Road, Eden Prairie, MN 55344 USA zu nennen.

Besonders bevorzugte Ausgestaltungsformen der Erfindung sehen vor, dass der Messfühlerträger auswechselbar mittels einer zerstörungsfrei lösbaren Verbindungseinrichtung am und/oder im Gehäuse der Durchflussmesseinrichtung befestigbar oder befestigt ist. Hierdurch wird es möglich, den Messfühlerträger einfach auszuwechseln oder für Montage-oder Wartungsmaßnahmen aus dem Gehäuse der Durchflussmesseinrichtung zu entnehmen und wieder einzubauen. Unter einer zerstörungsfrei lösbaren Verbindungseinrichtung wird dabei eine Einrichtung verstanden, welche für ein mehrfaches Verbinden und wieder Lösen geeignet und/oder vorgesehen ist, ohne dass dabei der Messfühlerträger oder das Gehäuse oder sie miteinander verbindende Mittel zerstört werden müssen. Beispiele für zerstörungsfrei lösbare Verbindungseinrichtungen sind Verschraubungen, Schnappverschlüsse und dergleichen. Diese können von Hand aber auch ausschließlich mit Werkzeug betätigbar sein. Nicht zerstörungsfrei lösbare Verbindungen sind z.B. Verkleben, Verschweißen, Verlöten und dergleichen.

Damit der Messfühlerträger nur in einer einzigen, nämlich der gewünschten bzw. richtigen Lage am und/oder im Gehäuse der Durchflussmesseinrichtung befestigbar ist, sehen bevorzugte Ausgestaltungsformen der Erfindung vor, dass der Messfühlerträger und/oder das Gehäuse der Durchflussmesseinrichtung eine Positionierungseinrichtung aufweist (aufweisen) mittels der der Messfühlerträger ausschließlich in einer einzigen Endlage am und/oder im Gehäuse der Durchflussmesseinrichtung befestigbar ist.

Weitere Merkmale und Einzelheiten bevorzugter Ausgestaltungsformen der Erfindung werden anhand der nachfolgenden Figurenbeschreibung weiter im Detail erläutert. Es zeigen:
- Fig. 1: eine erfindungsgemäße Durchflussmesseinrichtung in teilweise geschnitte- ner Darstellung;
- Fig. 2: die Durchflussmesseinrichtung aus Fig. 1, jedoch ohne den Anschlusskas- ten;
- Fig. 3: den Messfühlerträger dieses erfindungsgemäßen Ausführungsbeispiels;
- Fig. 4: einen Schnitt durch die Durchflussmesseinrichtung, den Anschlusskasten und den Messfühlerträger;
- Fig. 5: einen vergrößerten Ausschnitt aus Fig. 4 im Bereich des Messfühlerträgers und des Drehelementes;
- Fig. 6: Teile des Messfühlerträgers und das Drehelement;
- Fig. 7: einen schematisiert dargestellten Schaltkreis;
- Fig. 8: eine schematisierte Darstellung zu Details der Messfühler und ihrer Schalt- kreise;
- Fig. 9a bis 9c: eine Darstellung der Ausgangssignale der Drehmessfühler und ihrer Aus- wertung;
- Fig. 10: eine schematisiertes Ablaufschema zur Auswertung der mit den Drehmess- fühlern gemessenen Ausgangssignale.

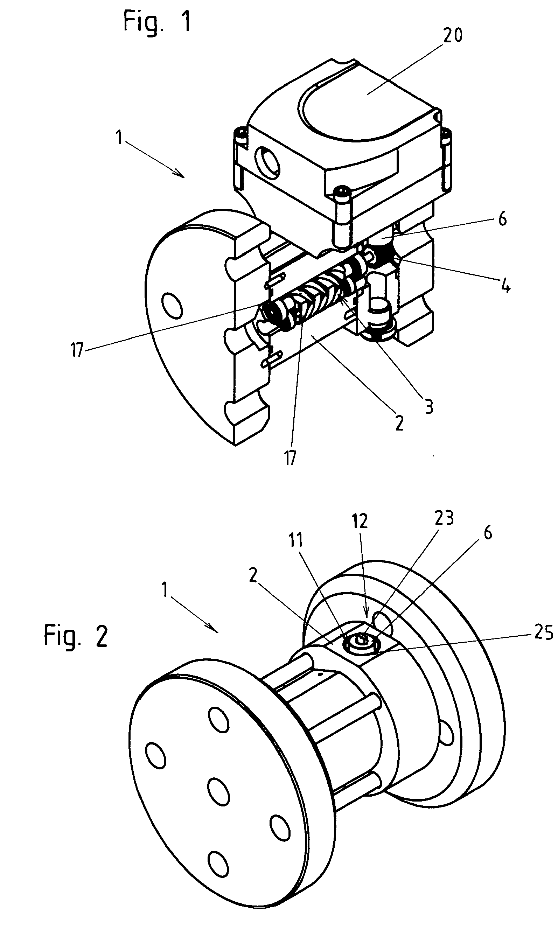

Fig. 1 zeigt einen Längsschnitt entlang der Messspindel 17 durch das Gehäuse 2 des Ausführungsbeispiels der erfindungsgemäßen Durchflussmesseinrichtung 1. Die Messspindeln 17 befinden sich in der von der Flüssigkeit zu durchströmenden Messkammer 3 der Durchflussmesseinrichtung 1. Beim Durchströmen der Flüssigkeit, deren Durchfluss gemessen werden soll, durch die Messkammer 3 werden die Messspindeln 17 gedreht. Die Anzahl der Umdrehungen der Messspindeln spiegeln die Menge der durchgeströmten Flüssigkeit wieder. Die Drehrichtung der Messspindeln 17 gibt die Durchströmrichtung der Flüssigkeit wieder. Das Drehelement 4 ist mit einer der Spindeln drehfest verbunden und im gezeigten Ausführungsbeispiel als Zahnrad ausgeführt. Auch andere Ausgestaltungen des Drehelementes sind möglich. Dreht sich die Messspindel 17, so wird auch das Drehelement 4 gedreht. Somit geben Drehrichtung und Anzahl der Drehungen des Drehelementes 4 ebenfalls die durchströmende Menge der Flüssigkeit und die Durchströmrichtung wieder. Solche Aufbauten sind bei Durchflussmesseinrichtungen gemäß des Standes der Technik bekannt. Es wird daher nicht weiter darauf eingegangen. Das gleiche gilt für die Zu- und Abströmkanäle, welche zur Messkammer 3 hin und von dieser wieder weg führen. Auch diese können, wie beim Stand der Technik bekannt, angeordnet und ausgeführt sein.

Im Gehäuse 2 bzw. in einem Aufnahmekanal 11 des Gehäuses 2 der Durchflussmesseinrichtung 1 ist, wie in Fig. 1 zu sehen, der Messfühlerträger 6 angeordnet. Hierauf wird weiter unten noch im Detail eingegangen. Außen am Gehäuse 2 der Durchflussmesseinrichtung 1 ist im gezeigten Ausführungsbeispiel ein Anschlusskasten 20 angeordnet. Dieser kann einerseits die Anschlüsse 23 des Messfühlerträgers 6 schützen. Andererseits kann der Anschlusskasten auch die Auswerteeinrichtung bzw. Auswerteelektronik zur, weiter unten im Detail erläuterten, Auswertung der gemessenen Signale beherbergen. Darüber hinaus kann der Anschlusskasten 20 auch dazu dienen, die Anschlüsse 23 des Messfühlerträgers 6 mit weiter führenden Kabeln zu verbinden.

Fig. 2 zeigt eine Ansicht von außen auf das Gehäuse 2 der erfindungsgemäß ausgebildeten Durchflussmesseinrichtung gemäß Fig. 1, wobei allerdings der Anschlusskasten 20 abgenommen ist. Zu sehen ist das hintere, in Betriebsstellung vom Drehelement 4 abgewandte Ende des Messfühlerträgers 6 mit seinen Anschlüssen 23. Der Messfühlerträger 6 befindet sich in der Darstellung gemäß Fig. 2 im Aufnahmekanal 11 des Gehäuses 2 der Durchflussmesseinrichtung 1. Der Messfühlerträger 6 ist in der Einführrichtung 12 in den Aufnahmekanal 11 einführbar und mittels der weiter unten erläuterten zerstörungsfrei lösbaren Verbindungseinrichtung 10 befestigbar. Randlich am Aufnahmekanal 11 ist auch das äußere Ende der Nut 25 zu sehen, welche einen Teil der weiter unten erläuterten Nut- und Zapfenführung 14 bildet.

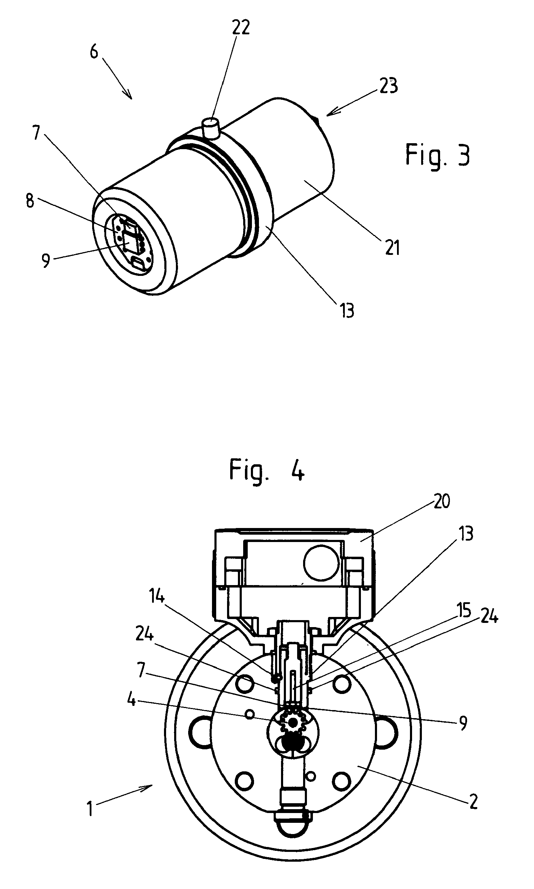

Fig. 3 zeigt den Messfühlerträger 6 in einem Zustand, in dem er aus dem Aufnahmekanal 11 und damit dem Gehäuse 2 der Durchflussmesseinrichtung 1 entnommen ist. Im gezeigten Ausführungsbeispiel weist der Messfühlerträger 6 ein annähernd zylinderförmiges Messfühlerträgergehäuse 21 auf. Dieses kann z.B. aus Metall, insbesondere einem rostfreien Metall wie z.B. rostfreiem Stahl bestehen oder solche Materialien aufweisen. Im gezeigten Ausführungsbeispiel sind an dieses Messfühlerträgergehäuse 21 ungefähr mittig der in diesem Ausführungsbeispiel ringförmige Anschlag 13 sowie der Zapfen bzw. Stift 22 angeformt. Sowohl Anschlag 13 als auch Zapfen 22 bilden Teile der weiter unten noch im Detail erläuterten Positioniereinrichtung, mittels der der Messfühlerträger 6 ausschließlich in einer einzigen Endlage am und/oder im Gehäuse 2 der Durchflussmesseinrichtung 1 befestigbar ist. Im in Einbaustellung dem Drehelement 4 zugewandten Endbereich des Messfühlerträgers 6 sind der Chip 9 und unmittelbar dazu benachbart der Temperaturmessfühler 7 am Messfühlerträger 6 angeordnet. In den Chip 9 dieses Ausführungsbeispiels sind, wie weiter unten im Detail erläutert, beide Drehmessfühler 5 integriert. Der Chip 9 und der Temperaturmessfühler 7 sind gemeinsam auf der Trägerplatte 8 an dem in Betriebstellung dem Drehelement 4 zugewandten Ende des Messfühlerträgers 6 angeordnet. Die Trägerplatte 8 kann aus Kunststoff ausgebildet sein oder Kunststoff aufweisen. Z.B. kann es sich um eine Trägerplatine für elektrische Schaltkreise handeln. Durch die gezeigte kompakte Bauweise kann dabei eine hohe Druckfestigkeit erreicht werden. Bei der, die Trägerplatte 8 bildenden Platine kann es sich um eine 3D-Platine handeln, welche die Leiterbahnen im Inneren des Messfühlerträgergehäuses 21 nach hinten zu den elektrischen Anschlüssen 23 führt. Die Anschlüsse 23 dienen der elektrischen Kontaktierung und stellen die Schnittstelle zwischen einer vorzugsweise im Anschlusskasten 20 angeordneten Auswerteeinrichtung bzw. deren Verkabelung und den Messfühlern 7 und 9 bzw. 5 dar. Die Anschlüsse 23 sind, wie hier gezeigt, günstigerweise am, dem Temperaturmessfühler 7 und dem Chip 9 bzw. den Drehmessfühlern 5 entgegen gesetzten Ende des Messfühlerträgers 6 angeordnet. In einer hier nicht gezeigten weiterführenden Ausgestaltungsform der Erfindung kann vorgesehen sein, dass der Temperaturmessfühler 7 und der Chip 9 bzw. die Drehmessfühler 5 von einer Membran abgedeckt sind. Die verhindert, dass diese elektronischen Bauteile bzw. die sie tragende Trägerplatte 8 von chemisch aggressiven Flüssigkeiten angegriffen werden können. Es kann sich z.B. um eine dünne Metallmembran aus rostfreiem Stahl handeln. Diese kann z.B. 0,2 mm dick sein, ohne den Messvorgang an sich zu stören. Falls eine solche schützende Membran vorhanden ist, deckt sie günstigerweise den gesamten Bereich des Chips 9 bzw. der Drehmessfühler 5, des Temperaturmessfühlers 7 und der Trägerplatte 8 ab, sodass keine Flüssigkeit direkt zu den Messfühlern gelangen kann.

Abweichend vom gezeigten Ausführungsbeispiel können zusätzlich zum Temperaturmessfühler 7 und zu den Drehmessfühlern 5 bzw. dem Chip 9 auf der Trägerplatte 8 auch weitere Sensoren z.B. zur Messung von Druck und/oder Dichte und/oder Viskosität angeordnet sein. Diese zusätzlichen Sensoren sind dann ebenfalls in den gemeinsamen Messfühlerträger 6 mit integriert.

Durch das Zusammenfassen der verschiedenen Messfühler 5 und 7 in einem Messfühlerträger 6 wird vermieden, dass zu deren Montage verschiedene zusätzliche Bohrungen z.B. in unterschiedlichen Winkeln und an unterschiedlichen Positionen zur Montage der Messfühler notwendig sind. Weiters sind Schwierigkeiten der Zusammenführung der Signale und des Schutzes der Messfühler vermieden. Darüber hinaus werden auch von vornherein Schwierigkeiten mit der Verhinderung der elektromagnetischen Beeinflussung der Messfühler durch die notwendige Verkabelung unterbunden.

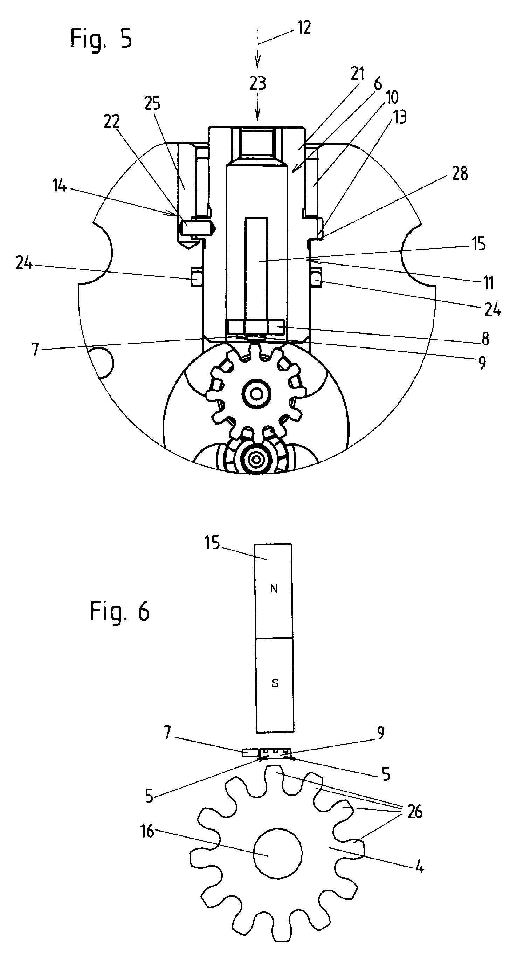

Fig. 4 zeigt einen Schnitt durch das Gehäuse 2 der Messeinrichtung 1 im Bereich des im Gehäuse 2 bzw. im Aufnahmekanal 11 montierten Messfühlerträgers 6. Die gezeigte Schnittebene steht normal auf der Längserstreckung der in Fig. 1 zu sehenden Messspindel 17. Fig. 5 zeigt einen Teilbereich dieses Schnittes aus Fig. 4 vergrößert. Der Messfühlerträger 6 ist in Einführrichtung 12 in den im Gehäuse 2 angeordneten Aufnahmekanal 11 eingeführt. Beim Einführen bzw. Einschieben des Messfühlerträgers 6 in Einführrichtung 12 in den Aufnahmekanal 11 wird eine Endposition erreicht, wenn der Anschlag 13 des Messfühlerträgers 6 am Anschlag 28 des Gehäuses 2 zur Anlage kommt. Durch das Zusammenwirken der beiden Anschläge 13 und 28 wird somit die Einführbarkeit des Messfühlerträgers 6 in den Aufnahmekanal 11 in Einführrichtung 12 begrenzt. Hierdurch wird in der Endlage sehr einfach aber auch sehr exakt der Abstand zwischen den, in den Chip 9 integrierten Drehmessfühlern 5 und dem Drehelement 4 eingestellt. Der Anschlag 13 wie auch der Gegenanschlag 28 bilden somit Teile einer Positioniereinrichtung, welche dafür sorgt, dass der Messfühlerträger 6 ausschließlich in einer einzigen Endlage am und/oder im Gehäuse 2 der Durchflussmesseinrichtung 1 befestigbar ist. Allgemein gesprochen, ist in diesem Zusammenhang somit vorgesehen, dass das Gehäuse 2 der Durchflussmesseinrichtung 1 und/oder der Messfühlerträger 6 als Teil der Positionierungseinrichtung, vorzugsweise jeweils, zumindest einen Anschlag 13, 28 aufweist, der die Einführbarkeit des Messfühlerträgers 6 in den Aufnahmekanal 11 in Einführrichtung 12 begrenzt.

Um auch ein versehentliches Verdrehen des Messfühlerträgers 6 beim Einbau in den Aufnahmekanal 11 zu vermeiden, sieht die Positioniereinrichtung günstigerweise weiters eine Nut- und Zapfenführung 14 am Gehäuse 2 der Durchflussmesseinrichtung 1 bzw. am Messfühlerträger 6 vor, welche ein Verdrehen des Messfühlerträgers 6 im Aufnahmekanal 11, vorzugsweise in einer Richtung um die Einführrichtung 12 herum, unterbindet. Dabei kann die Nut 25 der Nut- und Zapfenführung 14 in das Gehäuse 2 der Durchflussmesseinrichtung 1 eingeschnitten sein und der Zapfen 22 am Messfühlerträger 6 fixiert sein. Dies entspricht der besonders gut in Fig. 5 zu sehenden, im gezeigten Ausführungsbeispiel realisierten Ausgestaltungsform. Natürlich ist es auch genau so gut anders herum möglich, dass eine entsprechende Nut 25 sich im Messfühlerträger 6 befindet und der darin eingreifende Zapfen 22 am Gehäuse 2 der Durchflussmesseinrichtung 1 fixiert ist. Darüber hinaus sind natürlich auch andere Ausgestaltungsformen entsprechender Positionierungseinrichtungen möglich. Z.B. können die Anschläge 13 und 28 auch gleich in die Nut- und Zapfenführung 14 integriert sein. Gemeinsam ist den verschiedenen Möglichkeiten entsprechende Positionierungseinrichtungen zu schaffen jedenfalls, dass sie den Einbau des Messfühlerträgers 6 ausschließlich in einer einzigen Endlage am und/oder im Gehäuse 2 der Durchflussmesseinrichtung 1 erlauben, womit Fehlmontagen vermieden sind und nach erfolgtem Einbau des Messfühlerträgers 6 die Drehmessfühler 5 und der Temperaturmessfühler 7 immer für den Betrieb und eine fehlerfreie Messung exakt positioniert sind. Um den Messfühlerträger 6 zerstörungsfrei lösbar am und/oder im Gehäuse 2 zu befestigen, ist die Verbindungseinrichtung 10 vorgesehen. Im gezeigten Ausführungsbeispiel handelt es sich dabei um eine Schraubhülse, welche, nachdem der Messfühlerträger 6 in die gezeigte Endlage eingeführt ist, in den Aufnahmekanal 11 eingeschraubt wird und so den Anschlag 13 des Messfühlerträgers 6 am Anschlag 28 des Gehäuses 2 der Durchflussmesseinrichtung 1 fixiert. Im gezeigten Ausführungsbeispiel kann von der nach außen offenen Seite des Aufnahmekanals 11 her ein entsprechendes Werkzeug auf die Schraubhülse 10 aufgesetzt werden, um diese zu drehen. Z.B. kann die Schraubhülse 10 hierzu an ihrem vom Anschlag 13 abgewandten Ende entsprechende Schlitze oder dergleichen aufweisen, in die entsprechende Bereiche des hier nicht dargestellten Werkzeuges eingreifen können. Dies ist natürlich nur eines von vielen Beispielen, wie der Messfühlerträger 6 zerstörungsfrei lösbar mittels einer Verbindungseinrichtung 10 am und/oder im Gehäuse 2 der Durchflussmesseinrichtung 1 befestigbar ist.

In Fig. 5 ist in der gezeigten Schnittdarstellung auch noch die Dichtung 24 zu sehen, welche verhindert, dass Flüssigkeit am Messfühlerträger 6 vorbei durch den Aufnahmekanal 11 hindurch aus dem Gehäuse 2 der Durchflussmesseinrichtung 1 austreten kann.

Im gezeigten Ausführungsbeispiel ist innerhalb des Messfühlerträgers 6 ein Magnet 15, im vorliegenden Fall ein Permanentmagnet, zur Erzeugung eines Magnetfeldes angeordnet. Es muss aber nicht zwingend vorgesehen sein, dass der Messfühlerträger 6 den Magnet 15 aufweist. Es ist genauso gut möglich, dass das Gehäuse 2 der Durchflussmesseinrichtung 1 den Magneten 15 aufweist. In jedem dieser Fälle ist der Magnet 15 jedenfalls dazu vorgesehen, ein Magnetfeld zu erzeugen, welches beim Drehen des Drehelementes 4 von diesem gestört bzw. verändert wird. Im gezeigten Ausführungsbeispiel sind für diese Störungen des Magnetfeldes vor allem die Zähne 26 des als Zahnrad ausgebildeten Drehelementes 4 verantwortlich.

Fig. 6 zeigt schematisiert, dass der Magnet 15 günstigerweise auf der von den Messfühlern 5 und 7 abgewandten Seite des Drehelementes 4, angeordnet ist. Wie Fig. 6 zu entnehmen ist, ist günstigerweise vorgesehen, dass die Drehmessfühler 5 bzw. der sie aufnehmende Chip 9 vom Drehelement 4 bezüglich seiner Drehachse 16, um die das Drehelement 4 drehbar ist, radial beabstandet ist. Es kann aber genauso gut vorgesehen sein, dass eine Anordnung gewählt wird, in der, bezüglich der Drehachse 16 gesehen, das Drehelement 4 axial oder radial und axial von den Drehmessfühlern 5 beabstandet ist. Der Abstand zwischen den Drehmessfühlern 5 ist günstigerweise so gewählt, dass die beiden Drehmessfühler 5 beim durchflussbedingten Drehen des Drehelementes 4 ein um 90° phasenverschobenes Signal erzeugen. Bei der erfindungsgemäßen Bauweise ist es möglich, mit einem einzigen Messfühlerträger 6 und darauf angeordnetem Chip 9 bzw. Drehmessfühlern 5 und Temperaturmessfühler 7, verschiedene Arten von Drehelementen 4 bzw. Ausgestaltungsformen ihrer Zähne 26 in axialer oder radialer Richtung beabstandet zu messen. Durch die geschilderte Positionierungseinrichtung wird immer eine eindeutige Position hinsichtlich Schaltabstand und Ausrichtung erzielt, was eine einfache Austauschbarkeit des Messfühlerträgers 6 samt Messfühlern 5 und 7 erlaubt.

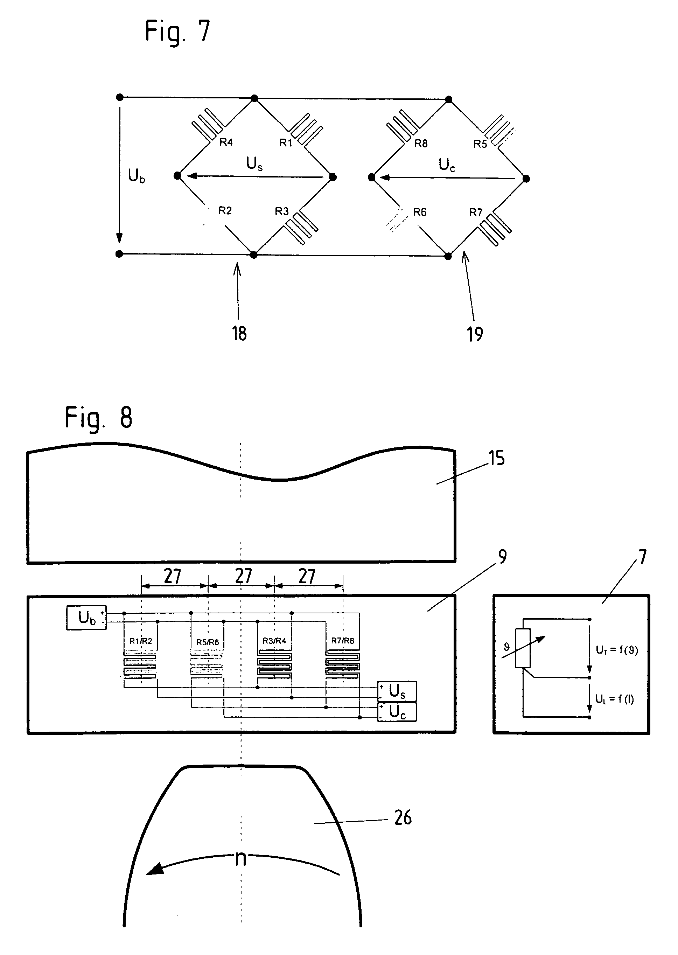

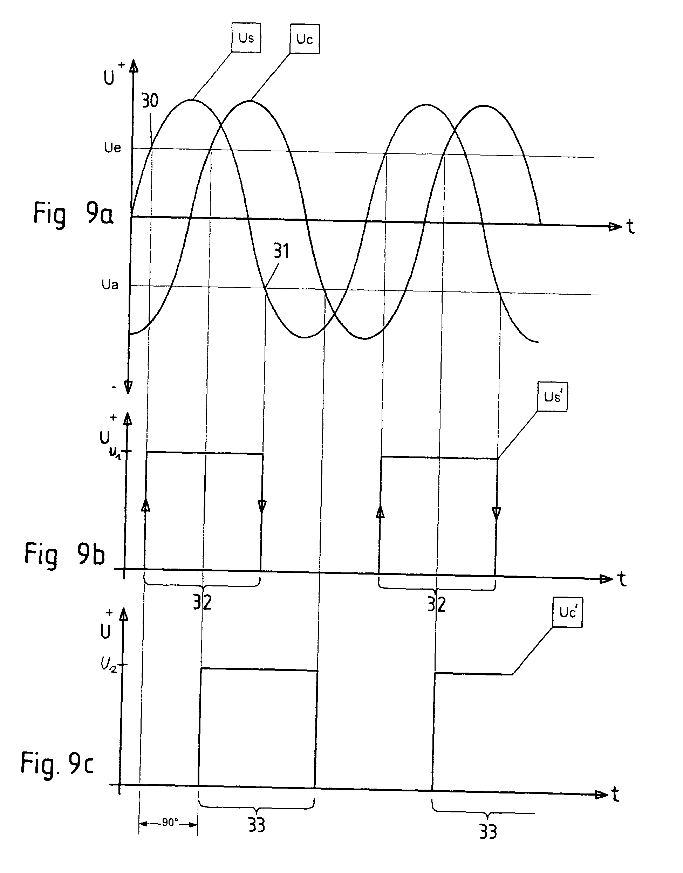

Fig. 7 zeigt schematisiert eine mögliche Schaltung der beiden Drehmessfühler 5. Fig .7 dient dabei rein dem grundsätzlichen Verständnis der Schaltung und gibt nicht die tatsächliche physische Ausgestaltungsform der Drehmessfühler 5 und ihrer Anordnung relativ zueinander wieder. Wie Fig. 7 zu entnehmen ist, kann jeder der Drehmessfühler 5 eine Messbrückenschaltung 18 bzw. 19 aufweisen. Im gezeigten Ausführungsbeispiel bildet die Messbrückenschaltung 18 den ersten Drehmessfühler 5 und die Messbrückenschaltung 19 den zweiten Drehmessfühler 5. Beide sind als Wheatstonebrücken ausgeführt und werden mit der Betriebsspannung U_{b} gespeist. Jede der Messbrückenschaltungen 18 und 19 weist jeweils 4 miteinander verschaltete Widerstände R1 bis R4 bzw. R5 bis R8 auf. Diese elektrischen Widerstände verändern ihren elektrischen Widerstand sobald sich ein äußeres, an sie angelegtes Magnetfeld ändert. Die Ausgangssignale U_{S} und U_{C} der beiden Messbrückenschaltungen 18 und 19 geben jeweils eine magnetische Feldstärke und/oder deren Änderungen eines vom jeweiligen Drehmessfühler gemessenen Magnetfeldes wieder. Bei den Ausgangssignalen U_{S} und U_{C} handelt es sich im gezeigten Ausführungsbeispiel dabei um an den entsprechenden Stellen abgegriffene Spannungen. Der Magnet 15 erzeugt ein Magnetfeld, welches durch das Drehen des Drehelementes 4 bzw. das Vorbeiführen eines Zahnes 26 am Chip 9 gestört bzw. temporär verändert wird. Die Drehmessfühler 5 bzw. ihre Messbrückenschaltung 18 und 19 messen diese durch das Drehelement 4 hervorgerufenen Änderung des Magnetfeldes und erzeugen hierdurch die Ausgangssignale U_{S} und U_{C}. Durch die entsprechend beabstandete Anordnung der beiden Drehmessfühler 5 bzw. Messbrückenschaltung 18 und 19 ergeben sich ein um 90° zueinander verschobenes Ausgangssignale U_{S} und U_{C}. Im gezeigten Ausführungsbeispiel sind, wie in Fig. 9a beispielhaft gezeigt, beide Ausgangssignale sinusförmig. Bei Veränderung der Drehgeschwindigkeit des Drehelementes 4 um seine Drehachse 16 ändert sich die Frequenz bzw. Periodendauer der Ausgangssignale der U_{S} und U_{C}, nicht aber ihre Phasenverschiebung zueinander.

Die Größe der Phasenverschiebung zwischen den beiden Ausgangssignalen U_{S} und U_{C} wird durch den räumlichen Versatz zwischen den Drehmessfühlern 5 bzw. ihren Messbrückenschaltungen 18 und 19 vorgegeben. Um, um 90° phasenverschobene Signale zu erzeugen, liegt dieser Versatz 27 günstigerweise zwischen 0,2 und 0,8mm, besonders bevorzugt zwischen 0,4 und 0,6mm. Im gezeigten Ausführungsbeispiel beträgt der Versatz 27 0,5mm.

Fig. 8 zeigt noch einmal schematisiert und vergrößert die Anordnung von Magnet 15, dem die beiden Drehmessfühler 5 bzw. ihre Messbrückenschaltung 18 und 19 aufnehmenden Chip 9 und dem Temperaturmessfühler 7, in Relation zu einem daran vorbei geführten Zahn 26 des Drehelementes 4. Fig. 8 zeigt ebenfalls schematisiert, wie in Realität die Widerstände A1 bis A8 der beiden Messbrückenschaltungen 18 und 19 einander überlagert angeordnet sind, um den Abstand 27 zwischen den Drehmessfühlern 5 und damit die Phasenverschiebung zwischen ihren Ausgangssignalen zu erzeugen. Wie eingangs erwähnt, sind solche auch als GMR-Doppelsensoren bezeichneten Chips 9 z.B. unter dem Handelsnamen NVE ABL 014 im Handel erhältlich. Beim Temperaturmessfühler 7 kann es sich, wie in Fig. 8 ebenfalls schematisiert angedeutet, günstigerweise um einen Dreileiter-Widerstandsführer handeln. Der ohmsche Widerstand dieses Temperaturmessfühlers ändert sich in Abhängigkeit von der Temperatur. Dieser Widerstand kann in Form von U_{T} als Funktion der Temperatur ϑ gemessen werden. Über den dritten Leiter bzw. die Spannung U_{L} können die Leitungswiderstände berücksichtig werden. Auf diese Art und Weise ist, wie beim Stand der Technik an sich bekannt, eine sehr genaue Temperaturmessung möglich. Die gemessene Temperatur dient, wie weiter unten erläutert, der Temperaturkompensation, der berechneten Durchflussparameter, womit die Temperaturabhängigkeit der Dichte des durch die Messkammer 3 hindurch strömender Flüssigkeit berücksichtigt und damit eine hochgenaue Durchflussmessung ausgeführt werden kann.

Die Fig. 9a bis 9c zeigen jeweils Diagramme, in denen eine Spannung U gegen die Zeit t aufgetragen ist. Fig. 9a zeigt beispielhaft und schematisiert, die Ausgangssignale U_{S} und U_{C} der beiden Drehmessfühler 5 bzw. ihrer Messbrückenschaltung 18 und 19. Zur weiteren Auswertung werden diese sinusförmigen Signale im gezeigten Ausführungsbeispiel mittels eines sogenannten und beim Stand der Technik bekannten Schmitt-Triggers in Rechtecksignale verwandelt. Fig. 9b zeigt den zeitlichen Verlauf des mittels des Schmitt-Triggers 29 aus U_{S} erzeugten Rechtecksignals U_{S}'. Fig. 9c zeigt die entsprechend aus U_{C} mittels des Schmitt-Triggers erzeugten Rechtecksignale U_{C}'. Auch die beiden in Fig. 9b und 9c gezeigten Rechtecksignale sind um 90° phasenverschoben. Zur Umwandlung der sinus- bzw. kosinusförmigen Signale U_{S} und U_{C} in die rechteckförmigen Signale U_{S}' und U_{C}' bedient sich der Schmitt-Trigger im vorliegenden Beispiel Spannungswerten Uₑ und Uₐ, welche im gezeigten Beispiel symmetrisch um die Nulllage von U gewählt sind. Hierdurch wird im gezeigten Ausführungsbeispiel ein Puls-Pause-Verhältnis von 1:1 in den Rechtecksignalen U_{S}' und U_{C}' erzielt. Erreicht das Signal U_{S} das erste Mal den Schaltwert Uₑ (siehe Fig. 9a) im Punkt 30, so schaltet der Schmitt-Trigger die Spannung U_{S}' von Null auf einen vorbestimmten Wert U₁. Wird anschließend nach dem Nulldurchgang des Signals U_{S} (siehe Fig. 9a) das erste Mal die Spannung Uₐ (im Punkt 31) erreicht, so wird U_{S}' vom Schmitt-Trigger wieder auf die Spannung Null gesetzt (siehe Fig. 9b). Dieser Vorgang wiederholt sich, sobald das Ausgangssignal U_{S} wieder das erste Mal die Schaltspannung Uₑ erreicht usw..

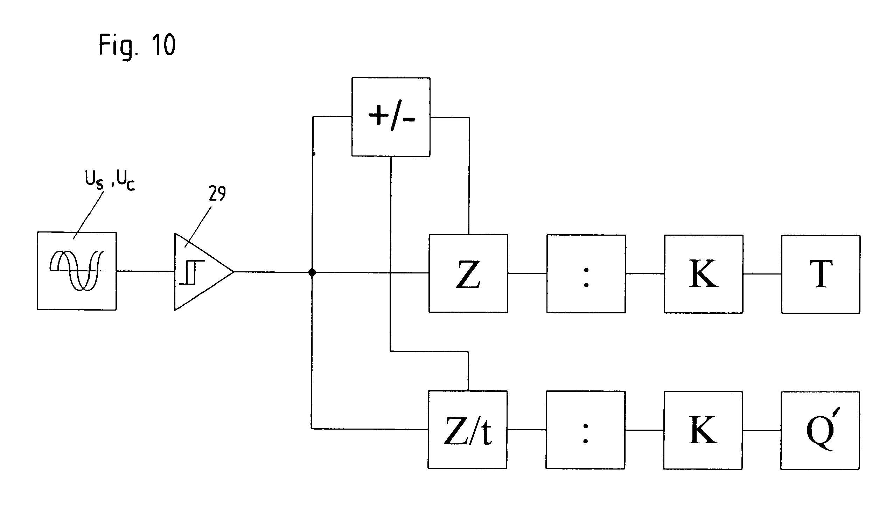

Die Generierung des Rechteckssignals U_{C}' aus dem Ausgangssignal U_{C} mittels des Schmitt-Triggers erfolgt in analoger Weise, wobei die Umschaltpunkte von U=0 auf U₂ (siehe Fig. 9c) allerdings um 90° phasenverschoben zu dem Rechtecksignal U_{S}' sind. Die so generierten Pulse 32 und 33 repräsentieren jeweils eine definierte Durchflussmenge also ein definiertes Durchflussvolumen an Flüssigkeit durch die Messkammer 3. Die Gesamtdurchflussmenge durch die Messkammer 3 während eines gewissen Zeitintervalls ergibt sich durch Aufsummieren der Anzahl der Pulse und Umrechnung mittels eines Kalibrierfaktors, wie dies im Folgenden anhand von Fig. 10 erläutert wird. Zur Bestimmung der Anzahl der Pulse pro Zeiteinheit reicht es zunächst einmal aus, nur eines der Signale U_{S}' bzw. U_{C}' heranzuziehen. Um auch die Durchflussrichtung bestimmen zu können und damit auch Durchflussrichtungsumkehrung erkennen zu können, werden beide Signale U_{S}' und U_{C}' gemeinsam ausgewertet. Durch die Beobachtung der von Null auf U₁ ansteigenden Flanke des ersten Signals U_{S}' und der zeitgleichen Berücksichtigung des Status des zweiten Signals U_{C}' ist, wie beim Stand der Technik an sich bekannt, eine Ermittlung der Drehrichtung des Drehelementes 4 und damit der Durchflussrichtung möglich.

Fig. 10 zeigt schematisiert ein mögliches Auswerteschema welches von einer geeigneten Auswerteeinrichtung ausgeführt werden kann, basierend auf der anhand der Fig. 9a bis 9c geschilderten Vorgehensweise. Zunächst werden die Ausgangssignale U_{S} und U_{C} der Messbrückenschaltung 18 und 19 bzw. der Drehmessfühler 5 mittels des Schmitt-Triggers 29 in Pulsfolgen U_{S}' und U_{C}' umgesetzt. Anschließend wird die Anzahl Z der Pulse 32 oder 33 über einen gewissen Zeitraum gezählt. Dabei wird, angedeutet durch "+/-" in Fig. 10, die Drehrichtung durch Vergleich der Signalfolgen U_{S}' und U_{C}' berücksichtigt. Ist die ermittelte Drehrichtung des Drehelements 4 konstant, so werden die Pulse 32 bzw. 33 aufsummiert. Kommt es zu einer Drehrichtungsumkehr des Drehelementes 4 und damit zu einer umgekehrten Durchströmungsrichtung, so werden die Pulse 32 bzw. 33 wieder abgezogen solange diese Drehrichtungsumkehr vorherrscht. Der so ermittelte Z-Wert gibt somit die Anzahl der Pulse über einen gewissen Zeitraum unter Berücksichtigung der Drehrichtung und damit der Durchströmrichtung der Flüssigkeit durch die Messkammer 3 wieder. Um die Durchflussmenge innerhalb eines gewissen Zeitraumes zu berechnen, wird die Anzahl der so bestimmten Pulse Z durch einen Kalibrierfaktor K geteilt. Dieser Kalibrierfaktor wird in einem entsprechenden Kalibriervorgang vorab bestimmt und gibt an, welche Durchflussmenge bzw. welches Volumen einem Puls 32 bzw. 33 entspricht. Durch die Division Z:K ergibt sich die Durchflussmenge T bzw. das durch die Messkammer 3 geflossene Volumen der Flüssigkeit während desjenigen Zeitraumes, während dem die Pulse gezählt worden sind. Um die Durchflussrate Q' also die Durchflussmenge pro Zeiteinheit zu bestimmen, wird im Wesentlichen analog vorgegangen, allerdings werden hier als Eingangsgröße der Berechnung die Anzahl der Pulse pro Zeiteinheit (Z/t) verwendet. Durch Division durch den Kalibrierfaktor ergibt sich so die Durchflussrate also die Durchflussmenge pro Zeiteinheit. Bei dieser Vorgehensweise sind die Temperatur bedingten Dichtewerte bzw. deren Änderungen der durch die Messkammer 3 hindurch strömenden Flüssigkeit noch nicht berücksichtigt. Um den Temperatureinfluss zu kompensieren, kann anhand der mittels des Temperaturmessfühlers 7 im jeweiligen Zeitintervall gemessenen Temperaturwertes die Dichte der durchströmenden Flüssigkeit bei der gemessenen Temperatur bzw. dem gemessenen Temperaturverlauf bestimmt werden. Hierzu kann auf entsprechende Tabellenwerte, Eichkurven oder Berechnungsformeln, welche beim Stand der Technik bekannt sind, zurückgegriffen werden. Mittels der so bestimmten Dichte bzw. des so bestimmten Dichteverlaufs kann dann aus der, wie vorab geschildert, bestimmten Durchflussmenge T die in diesem Zeitintervall durch die Messkammer 3 hindurch geströmte Masse an Flüssigkeit bestimmt werden. Aus Q' kann mittels der temperaturabhängig bestimmten Dichte der Flüssigkeit die Durchflussmasse der Flüssigkeit pro Zeiteinheit berechnet werden. Falls dies gewünscht ist, können aus den so berechneten Massen bzw. Massen pro Zeiteinheit mittels einer Dichte bei einer bestimmten vorgegebenen Temperatur der Flüssigkeit wiederum Durchflussmengen bzw. Durchflussraten berechnet werden, welche dem Volumen bzw. dem Volumen pro Zeiteinheit bei einer vorgegebenen Temperatur entsprechen würden. Alternativ zu dieser Vorgehensweise der Temperaturkompensation der Messergebnisse ist es auch möglich, die Kalibrierfaktoren K in Abhängigkeit der Temperatur zu bestimmen. Bei dieser Vorgehensweise könnte dann bei der Berechnung gemäß Fig. 10 jeweils ein in Abhängigkeit der vom Temperaturmessfühler 7 gemessenen Temperatur ausgewählter K-Wert zur Berechnung von Durchflussmenge T oder Durchflussrate Q' herangezogen werden. Unabhängig davon, welche der vorgeschlagenen Vorgehensweisen zur Temperaturkompensation nun herangezogen wird, erlaubt es der erfindungsgemäß mit in den Messfühlerträger 6 integrierte Temperaturmessfühler 7 die Einflüsse der Temperatur der Flüssigkeit auf seine Dichte bei der Bestimmung der Durchflussmengen bzw. Durchflussraten zu berücksichtigen. Weiters erkennt das vorgeschlagene System, wenn es zu Umkehrungen oder Änderungen der Durchflussrichtung kommt, sodass auch hierdurch keine Fehler in den berechneten Durchflussmengen bzw. Durchflussraten oder daraus abgeleiteten Parametern entstehen können.

### Legende

### zu den Hinweisziffern:

- 1: Durchflussmesseinrichtung
- 2: Gehäuse
- 3: Messkammer
- 4: Drehelement
- 5: Drehmessfühler
- 6: Messfühlerträger
- 7: Temperaturmessfühler
- 8: Trägerplatte
- 9: Chip
- 10: Verbindungseinrichtung
- 11: Aufnahmekanal
- 12: Einführrichtung
- 13: Anschlag
- 14: Nut- und Zapfenführung
- 15: Magnet
- 16: Drehachse
- 17: Messspindel
- 18, 19: Messbrückenschaltung
- 20: Anschlusskasten
- 21: Messfühlerträgergehäuse
- 22: Zapfen
- 23: Anschlüsse
- 24: Dichtung
- 25: Nut
- 26: Zahn
- 27: Versatz
- 28: Anschlag
- 29: Schmitt-Trigger
- 30: Punkt
- 31: Punkt
- 32: Puls
- 33: Puls
- U_{S}, U_{c}: Ausgangssignal
- U_{S}', U_{c}': Rechtecksignal
- Uₑ, Uₐ: Schaltspannungen
- U₁, U₂: vorgegebener Wert
- U_{b}: Betriebsspannung

## Patentansprüche

1. Durchflussmesseinrichtung (1) zur Messung eines Durchflusses zumindest einer Flüssigkeit durch eine, in einem Gehäuse (2) der Durchflussmesseinrichtung (1) angeordnete Messkammer (3), wobei die Durchflussmesseinrichtung (1) zumindest ein drehbar gelagertes und von durch die Messkammer (3) hindurch fließender Flüssigkeit drehbares Drehelement (4) und zumindest zwei Drehmessfühler (5) zur Messung der Drehung des Drehelementes (4) aufweist, **dadurch gekennzeichnet, dass** die beiden Drehmessfühler (5) an einem gemeinsamen Messfühlerträger (6) angeordnet sind und an dem gemeinsamen Messfühlerträger (6) zusätzlich noch ein Temperaturmessfühler (7) angeordnet ist.

2. Durchflussmesseinrichtung (1) nach Anspruch 1, **dadurch gekennzeichnet, dass** die Drehmessfühler (5) und der Temperaturmessfühler (7) auf einer gemeinsamen Trägerplatte (8), vorzugsweise auf einer gemeinsamen Trägerplatine, des Messfühlerträgers (6) angeordnet sind.

3. Durchflussmesseinrichtung (1) nach Anspruch 1 oder 2, **dadurch gekennzeichnet, dass** die Drehmessfühler (5) in einen gemeinsamen Chip (9) integriert sind.

4. Durchflussmesseinrichtung (1) nach einem der Ansprüche 1 bis 3, **dadurch gekennzeichnet, dass** der Messfühlerträger (6) auswechselbar mittels einer zerstörungsfrei lösbaren Verbindungseinrichtung (10) am und/oder im Gehäuse (2) der Durchflussmesseinrichtung (1) befestigbar oder befestigt ist.

5. Durchflussmesseinrichtung (1) nach Anspruch 4, **dadurch gekennzeichnet, dass** das Gehäuse (2) der Durchflussmesseinrichtung (1) einen Aufnahmekanal (11) aufweist, in den der Messfühlerträger (6) in einer Einführrichtung (12) einführbar ist und in dem der Messfühlerträger (6) mittels der Verbindungseinrichtung (10) befestigbar ist.

6. Durchflussmesseinrichtung (1) nach einem der Ansprüche 1 bis 5, **dadurch gekennzeichnet, dass** der Messfühlerträger (6) und/oder das Gehäuse (2) der Durchflussmesseinrichtung (1) eine Positionierungseinrichtung aufweist (aufweisen) mittels der der Messfühlerträger (6) ausschließlich in einer einzigen Endlage am und/oder im Gehäuse (2) der Durchflussmesseinrichtung (1) befestigbar ist.

7. Durchflussmesseinrichtung (1) nach Anspruch 5 und 6, **dadurch gekennzeichnet, dass** das Gehäuse (2) der Durchflussmesseinrichtung (1) und/oder der Messfühlerträger (6) als Teil der Positionierungseinrichtung, vorzugsweise jeweils, zumindest einen Anschlag (13, 28) aufweist, der die Einführbarkeit des Messfühlerträgers (6) in den Aufnahmekanal (11) in Einführrichtung (12) begrenzt.

8. Durchflussmesseinrichtung (1) nach Anspruch 5 und 6 oder nach Anspruch 7, **dadurch gekennzeichnet, dass** die Positionierungseinrichtung eine Nut- und Zapfen- Führung (14) am Gehäuse (2) der Durchflussmesseinrichtung (1) bzw. am Messfühlerträger (6) aufweist, welche ein Verdrehen des Messfühlerträgers (6) im Aufnahmekanal (11), vorzugsweise in einer Richtung um die Einführrichtung (12) herum, unterbindet.

9. Durchflussmesseinrichtung (1) nach einem der Ansprüche 1 bis 8, **dadurch gekennzeichnet, dass** der Messfühlerträger (6) oder das Gehäuse (2) der Durchflussmesseinrichtung (1) einen Magneten (15), vorzugsweise ein Permanentmagneten, zur Erzeugung eines Magnetfeldes aufweist.

10. Durchflussmesseinrichtung (1) nach einem der Ansprüche 1 bis 9, **dadurch gekennzeichnet, dass** das Drehelement (4) ein Zahnrad ist und/oder die Drehmessfühler (5) vom Drehelement (4) bezüglich einer Drehachse (16) gesehen, um die das Drehelement (4) drehbar ist, radial und/oder axial beanstandet sind und/oder das Drehelement (4) mit zumindest einer, in der Messkammer (3) drehbar gelagerten und von durch die Messkammer (3) hindurch fließender Flüssigkeit drehbaren Messspindel (17) verbunden ist.

11. Durchflussmesseinrichtung (1) nach einem der Ansprüche 1 bis 10, **dadurch gekennzeichnet, dass** jeder Drehmessfühler (5) eine Messbrückenschaltung (18, 19) aufweist, deren Ausgangssignale (Uₛ, U_{c}) eine magnetische Feldstärke und/oder deren Änderung eines vom jeweiligen Drehmessfühler (5) gemessenen Magnetfeldes wiedergibt.

12. Durchflussmesseinrichtung (1) nach einem der Ansprüche 1 bis 11, **dadurch gekennzeichnet, dass** die Drehmessfühler (5) und/oder Messbrückenschaltungen (18, 19) der Drehmessfühler (5), vorzugsweise mit einem Versatz (27) zwischen 0,2 mm und 0,8 mm, räumlich zueinander versetzt angeordnet sind.

13. Durchflussmesseinrichtung (1) nach einem der Ansprüche 1 bis 12, **dadurch gekennzeichnet, dass** die Drehmessfühler (5) bei Drehung des Drehelementes (4) um 90° zueinander phasenverschobene und/oder sinusförmige Ausgangssignale (Uₛ, U_{c}) abgeben.

14. Durchflussmesseinrichtung (1) nach einem der Ansprüche 1 bis 13, **dadurch gekennzeichnet, dass** sie eine Auswerteeinrichtung zur temperaturkorrigierten Bestimmung von Durchflussmenge und/oder Durchflussrate und/oder Durchflussrichtung der Flüssigkeit oder davon abgeleiteten Größen aus Drehgeschwindigkeit und Drehrichtung des Drehelementes (4) auf Basis von Ausgangssignalen (Uₛ, U_{c}) der Drehmessfühler (5) aufweist.

15. Verfahren zum Betrieb einer Durchflussmesseinrichtung nach Anspruch 14, **dadurch gekennzeichnet, dass** von der Auswerteeinrichtung aus den Ausgangssignalen (Uₛ, U_{c}) der Drehmessfühler (5) die Durchflussmenge und/oder die Durchflussrate und/oder die Durchflussrichtung der Flüssigkeit und/oder davon abgeleitete Größen bestimmt werden, wobei bei oder nach der Bestimmung der Durchflussmenge und/oder Durchflussrate und/oder der Durchflussrichtung der Flüssigkeit und/oder der davon abgeleiteten Größen der Einfluss der mittels des Temperaturfühlers ermittelten Temperatur auf die Dichte der Flüssigkeit berücksichtigt bzw. korrigiert wird.
